(19) **Europäisches Patentamt / European Patent Office / Office européen des brevets**

(11) **EP 1 336 121 B1**

(12) # EUROPEAN PATENT SPECIFICATION

(45) Date of publication and mention
of the grant of the patent:
**03.01.2007 Bulletin 2007/01**

(51) Int Cl.:
*G01V 7/12* (2006.01)  *G01B 7/16* (2006.01)

(21) Application number: **01926229.4**

(22) Date of filing: **03.05.2001**

(86) International application number:
**PCT/LV2001/000002**

(87) International publication number:
**WO 2002/042800 (30.05.2002 Gazette 2002/22)**

(54) **MICROMOVEMENT MEASURING DEVICE AND METHOD OF MOVEMENT PROCESS CONVERSION TO AN ELECTRIC SIGNAL**

VORRICHTUNG ZUR MESSUNG VON MIKROBEWEGUNGEN UND VERFAHREN ZUR UMWANDLUNG DER BEWEGUNGEN IN EIN ELEKTRISCHES SIGNAL

DISPOSITIF DE MESURE DE MICRO-MOUVEMENT ET PROCEDE DE CONVERSION D'UN PROCESSUS DE MOUVEMENT EN UN SIGNAL ELECTRIQUE

(84) Designated Contracting States:
**AT BE CH CY DE DK ES FI FR GB GR IE IT LI LU MC NL PT SE TR**

(30) Priority: **24.11.2000 LV 000159**

(43) Date of publication of application:
**20.08.2003 Bulletin 2003/34**

(73) Proprietor: **A-Metrics LLC**
**Charlotte, NC 28226 (US)**

(72) Inventors:
• **BEKERS, Leonids**
**LV-1006 Riga (LV)**
• **LUBGINS, Bonifatijs**
**LV-1082 Riga (LV)**
• **FINKELSHTEINS, Jehezkelis**
**LV-1055 Riga (LV)**

• **NUROVS, Juris**
**Moscow, 121069 (RU)**
• **PIORUNSKIS, Alexandrs**
**Moscow, 121552 (RU)**

(74) Representative: **Maggs, Michael Norman et al**
**Kilburn & Strode**
**20 Red Lion Street**
**London WC1R 4PJ (GB)**

(56) References cited:
**DE-A- 3 824 950**    **SU-A- 947 626**

• **KENNY T W: "ELECTRON TUNNEL SENSORS" JOURNAL OF VACUUM SCIENCE AND TECHNOLOGY: PART A,US,AMERICAN INSTITUTE OF PHYSICS. NEW YORK, vol. 10, no. 4 PT II, 1 July 1992 (1992-07-01), pages 2114-2118, XP000296388 ISSN: 0734-2101**

EP 1 336 121 B1

## Description

The invention relates to the field of instrumentation, in particular, to measurement of micromovement and can be used for measuring, detecting and recording creeping and dynamic infraprocesses in nature, engineering and bionics, for example, for recording baric, thermal and hygrometric tendencies in meteorology, for recording creeping of the engineering structures, for testing leakproofness of small and large installations, in security systems, as well as for recording seismic, infrasound and gravitation waves. In bionics, the proposed device can be used as a part of tactile sensitivity, in bionic prostheses, bionic robots and zoo-robots.

To embody the above problems the measuring systems shall have maximum possible sensitivity (up to Angstrom units - Å) wide dynamic range and low sluggishness.

At present the highest sensitivity and wide dynamic range are provided by X-ray interferometers which embody spectrometric method of measuring. However, in the cases that lie outside metrology and investigations of crystal structure of the materials, their use does not find application owing to high sluggishness of the sensitive element, cumbersome apparatus design, complexity and high price.

Capacitance and inductive transducers have found wide application for measuring small movements. The limitation of their use is attributed to the fact that raising of the sensitivity of these transducers necessarily leads to narrowing of the dynamic range because of non-linearity of analog measuring characteristic. The section of particular portion of characteristic determines the dynamic range of the transducer (see for example, A.M. Туричин et al., "Электрические измерения неэлектрических величин", Л., "Энергия», 1975, pp.96-98).

Devices are known for measuring small movements that are based on artificial quantization of linear or angular movements by means of the distributed quantizing measuring elements (grids). As and example an increment encoder can be referred (К. Бриндли "Измерительные преобразователи: Справочное пособие", Translated from English. М., Энергоатомиздат, 1991, pp. 62-63). Resolution of such type of encoder depends on the number of sensitive segments on the disk or band of the transducer, which determines mechanical limit of their sensitivity (no more than 0.01 micron).

The closest decision accepted as prototype is a micromovement sensor according to the USSR author's certificate No. 947 626, in which a method of measuring with using natural quantization effects was embodied. This device contains the transducer consisting of sensitive and measuring elements that converts the monotonic movements to pulse delta modulated electric signal. The sensitive element is fixed on the elastic membrane and interacts with a source of the micromovement (tested object), whereas spring-loaded mobile measuring element is a core of the electromagnet that fixes the measuring element in the position of contact with the sensitive element, when applying exciting current from the signal conditioner.

In the initial state the electric contact between sensitive and measuring elements creates closed electric circuit through which electric current flows; as a result, at the output of the signal conditioner appears exciting current that energizes the electromagnet and fixes the measuring element. When the tested object shifts, the sensitive element moves in the direction of breaking the contact between measuring and sensitive elements due to the action of measuring force created by the membrane. At the instant of breaking electric circuit the signal conditioner removes the exciting current from the winding of fixing electromagnet, and the measuring element under the action of the spring moves in the direction to the sensitive element until the contact between the sensitive and measuring elements is recovered and the measuring element is fixed in a new position.

The breaking and recovering of the contact forms the leading and trailing edges of the pulse signal that is equivalent to single movement of the measuring element, thus performing conversion of monotonic movement to pulse delta modulated electric signal by the use of natural quantization effect-hysteresis. The quantized movement is characterized by the value determined by two states of the electric contact (closed-broken).

The disadvantage of the known device is determined by the fact that at the instant of the contact between measuring and sensitive elements is set up, the force of the spring pressure moving the measuring elements is transmitted through the sensitive element onto the tested object, in which elastic microdeformation arises as a result of this contact force. The value of this microdeformation restricts the ultimate attainable sensitivity to the level of 0.2 micron. In addition, when electric contact is broken, an electroerosive bridge arises. This bridge current is detected by the signal conditioner as the presence of the contact, and the measuring pulse arises only after bridge breaking. Thus, the length of every micromovement of the measuring element cannot be less than the length of the electroerosive bridge and the value of arisen microdeformation taken together. Additionally, occurrence of the electroerosive bridge leads to the geometry violation of the contact elements that causes instability of their metrological characteristics.

The object of the proposed invention is to raise sensitivity of the device in a wide dynamic range by eliminating elastic microdeformations in dimensional circuit "transducer-object" and also to eliminate the electroerosive processes at working surfaces of the sensitive and measuring elements.

According to the present invention there is provided a micromovement measuring device as set out in the characterizing portion of the independent claims.

Maximum dynamic range of micromovements to be measured can be provided by locating of the pulling electromagnet on the membrane connected to the sensitive element.

To exclude formation of oxide, water and other similar films at the working surfaces of the sensitive and measuring elements the claimed device is located in hermetic housing filled with inert medium.

The method of converting micromovements to electrical signal that is used in the claimed device excludes the formation of the electroerosive bridges in running clearance. This method lies in the fact that fixation of the measuring element is provided when then the current of the field electronic emission arises between the measuring and sensitive elements, and the measuring element is released and shifted when the current of the field electronic emission abrupts.

The principal diagram of the device is given in Figure.

Micromovement measuring device consists of the sensitive element 1, the measuring element 2 with the washer 3, the fixing electromagnet 4 The measuring element 2 is connected to the signal conditioner 6 that contains the operating voltage source 7 and the current limiter 8. The output of the signal conditioner 6 is connected to the input of the amplifier 9, the direct output of which is connected to the winding of the fixing electromagnet 4 and inverse output is connected to the winding of the pulling electromagnet 5. The pulling electromagnet 5 is located on the membrane 10, which together with the housing 11 forms the hermetic chamber 12 filled with protective medium. The output pulse signal comes from the amplifier 9 to the indicator 13. The conditional tested object 14 is connected to the sensitive element.

The device operates in the following way.

When the sensitive element 1 moves under the action of the elastic force of the membrane 10 followed by the tested object 14, the abruption of the electrical conduction occurs in measuring circuit "the operating voltage source 7 - the current limiter 8 - the measuring element 2 - the sensitive element 1- the membrane 10 - "ground". At the instant of the abruption of field electronic emission current the amplifier 9 controlled by the signal conditioner 6 removes an exciting current from the fixing electromagnet 4, and simultaneously applies an exciting current onto the winding of the pulling electromagnet 5. Under the action of attractive force from the pulling electromagnet 5 that is applied to the washer 3, the measuring element 2 freed from fixing force of the electromagnet 4 moves in the direction to the sensitive element 1. This movement occurs till the electronic field emission current arises between the sensitive element and the measuring element 2 in the above measuring circuit i.e. at the distance that is determined by the expression:

$$\lambda = U/E,$$

where $\lambda$ - a value of the clearance between the measuring element 2 and sensitive element 1 at which the electronic field emission current arises;

U - the chosen value of the operating voltage;

E - intensity of electronic field emission equal to ~$10^9$ Volt/metre.

At the chosen value of the operating voltage 0.05Volt the distance at which the current electronic field emission will occur is equal to $5 \cdot 10^{-11}$ m or 0.5 Å.

At the instant when the emission current arises the electromagnet 4 and 5 controlled by the amplifier 9 change their state: the exciting current is removed from the pulling electromagnet 5, and the measuring element 2 is fixed in a new position because of attracting to the fixing electromagnet 4. The proceeding movement of the sensitive element 1 under elastic force of the membrane 10 followed the moving tested object 14 leads to the abruption of the electronic field emission current (at the distance between the measuring element 2 and the sensitive element 1 equal to $\lambda + \Delta$, where $\Delta$ is a value of hysteresis of electronic field emission) and the process is repeated in above sequence.

Every cycle recurring at the movement of the sensitive element 1 forms both leading and training edges of pulses that are equivalent to a single movement of the measuring element 2. The occurring pulses come from the amplifier 9 to the indicator 13 and are recorded.

The "value" of one pulse is determined by the combined hysteresis, which is dependent on the sluggishness of the measuring element 2 and reaction time of the pulling electromagnet 5 and the fixing electromagnet 4 and on the value of hysteresis of electronic field emission as well.

The location of the pulling electromagnet 5 on the membrane 10 provides functioning of the device at all movement length of the measuring 2 that is determined by allowed deflection of the membrane 10. It is explained by the fact that while moving the sensitive element 1 magnetic running clearance is kept constant in this case.

The location of the measuring element 2 and the sensitive element 1 in the hermetic chamber 12 confirmed by the housing 11 and the membrane 10 and filled by inert medium excludes the formation at the working surfaces of the oxide and other films that prevent occurrence of electronic field emission current.

The proposed decision has the following features:

- conversion of the monotonic micromovements to delta modulated pulse electric signal occurs without arising microdeformations in dimensional circuit "transducer-object". As it is evident from the foregoing, it is provided in the following way: the transfer of the measuring circuit from one stable state into another occurs in the absence of the direct electric contact between the measuring element 2 and the sensitive element 1 and, therefore, without occurring elastic deformation;

- the sensitivity of the measuring circuit is set by the chosen value of operating voltage.

The whole complex of the claimed features and the method provides conversion of micromovements to delta modulated pulse electrical signal with the device sensitivity in a range of units of angstroms.

**Example of embodiment**

The measurement of the movement of the metallic bar was made in accordance with the procedure determined by the GOST 8.491-83 (GOST-All-Union State Standard of the former USSR). This permitted to exclude some disturbances connected with non-uniform movement in case of using of a screw pair (according to the procedure of GOST). The measuring spring head (opticator) of the 01Π Type was used as a reference apparatus. When extending the bar by 1 micron (that is recorded by the opticator), the signal conditioner of the claimed transducer generated a sequence of $2 \cdot 10^4$ pulses recorded by the Ч3-34A frequency meter (when using gold surfaces of the measuring and sensitive elements and when the value of operating voltage in measuring circuit is equal to 0.05Volt). It means the one pulse corresponds to $1/2 \cdot 10^{-10}$ metre, i.e. $0.5 \text{Å}$ - the value defining the sensitivity of the claimed device.

The proposed device may be embodied in two-channel version, should the need arise, to measure sign-variable movements.

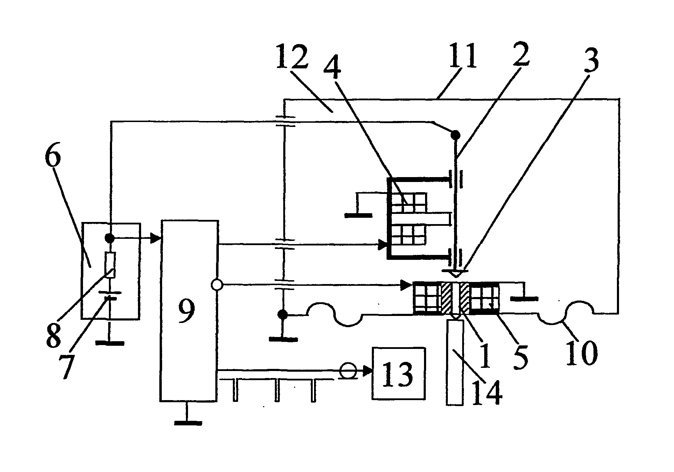

**Claims**

1. A micromovement measuring device for measuring micromovement of a test object comprising:

   a measuring circuit comprising a signal conditioner (6), a measuring element (2), a sensitive element (1) and a membrane (10) connected to ground;
   the membrane being adapted to interact with the tested object; and a fixing electromagnet (4)

   **characterised by**
   a pulling electromagnet (5); and
   the measuring circuit, in the absence of direct contact between the measuring element and the sensitive element, is arranged to be transferable from one stable state, in which the measuring element is fixed by the fixing electromagnet when an electronic field emission current arises between the measuring and sensitive elements, to another state in which the measuring element is released by the fixing electromagnet and moved by the pulling electromagnet when the electronic field emission current is interrupted.

2. A device as claimed in claim 1 in which the pulling electromagnet (5) is arranged to move the measuring element in a direction towards the sensitive element (1).

3. A device as claimed in claim 1 or claim 2 in which the pulling electromagnet (5) is located on the membrane (10).

4. A device as claimed in any of claims 1 to 3 in which the sensitive element (1) and the measuring element (2) are located in a hermetic housing (12) filled with an inert medium, one of the housing walls being formed by the membrane.

5. A method of micromovement conversion to electrical signal by means of natural quantization including the steps of:

   i causing a fixing electromagnet (4) to fix a measuring element (2) when an electronic field emission current occurs, and
   ii when the electronic field emission current is interrupted, causing the fixing electromagnet to release the measuring element and causing a pulling electromagnet (5) to attract the measuring element in a direction towards a sensitive element (1).

**Patentansprüche**

1. Mikrobewegungs-Messgerät für das Messen von Mikrobewegungen eines Testobjekts, welches Gerät aufweist:

   eine Messschaltung, welche eine Signal-Konditioniereinrichtung (6), ein Messelement (2), ein Fühlelement (1) sowie eine geerdete Membran (10) aufweist;

   wobei die Membran geeignet ist, mit dem getesteten Objekt zu interagieren; und einen fixierenden Elektromagneten (4)
   **gekennzeichnet durch**
   einen ziehenden Elektromagneten (5); und
   die Messschaltung, die in Abwesenheit eines direkten Kontaktes zwischen dem Messelement und dem Fühlelement angeordnet ist, sodass sie von einem stabilen Zustand, in welchem das Messelement von dem fixierenden Elektromagneten fixiert ist, wenn ein elektronischer Feldemissionsstrom zwischen den Mess- und Fühlelementen auftritt, zu einem anderen Zustand umschaltbar ist, in welchem das Messelement von dem fixierenden Elektromagneten freigegeben ist, und **durch** den ziehenden Elektromagneten bewegt wird, wenn der elektronische Feldemissionsstrom unterbrochen ist.

2. Gerät nach Anspruch 1, wobei der ziehende Elektromagnet (5) angeordnet ist, um das Messelement in Richtung des Fühlelementes (1) zu bewegen.

3. Gerät nach Anspruch 1 oder 2, wobei der ziehende Elektromagnet (5) auf der Membran (10) angeordnet ist.

4. Gerät nach einem der Ansprüche 1 bis 3, wobei das Fühlelement (1) und das Messelement (2) in einem hermetischen Gehäuse (12) angeordnet sind, welches mit einem inerten Medium gefüllt ist, wobei eine der Gehäusewände von der Membran gebildet ist.

5. Verfahren zur Umwandlung einer Mikrobewegung in ein elektrisches Signal mittels einer natürlichen Quantisierung, welches folgende Schritte aufweist:

> i. Bewirken, dass ein fixierender Elektromagnet (4) ein Messelement (2) fixiert, wenn ein elektronischer Feldemissions-Strom auftritt, und
> ii. Wenn der elektronische Feldemissions-Strom unterbrochen ist, Bewirken, dass der fixierende Elektromagnet das Messelement freigibt und Bewirken, dass ein ziehender Elektromagnet (5) das Messelement in Richtung zu einem Fühlelement (1) zieht.

## Revendications

1. Dispositif de mesure de micromouvement pour mesurer un micromouvement d'un objet de test, comprenant :

> un circuit de mesure comprenant un conditionneur de signal (6), un élément de mesure (2), un élément sensible (1) et une membrane (10) reliée à la terre;
> la membrane étant adaptée pour interagir avec l'objet de test; et
> un électroaimant de fixation (4),

**caractérisé par** :

> un électroaimant de traction (5); et
> le circuit de mesure, en l'absence d'un contact direct entre l'élément de mesure et l'élément sensible, est conçu pour pouvoir être transféré d'un état stable, dans lequel l'élément de mesure est fixé par l'électroaimant de fixation lorsqu'un courant d'émission de champ électronique survient entre l'élément de mesure et l'élément sensible, à un autre état dans lequel l'élément de mesure est relâché par l'électroaimant de fixation et déplacé par l'électroaimant de traction lorsque le courant d'émission de champ électronique est interrompu.

2. Dispositif selon la revendication 1, dans lequel l'électroaimant de traction (5) est disposé pour déplacer l'élément de mesure dans une direction vers l'élément sensible (1).

3. Dispositif selon la revendication 1 ou la revendication 2, dans lequel l'électroaimant de traction (5) est situé sur la membrane (10).

4. Dispositif selon l'une quelconque des revendications 1 à 3, dans lequel l'élément sensible (1) et l'élément de mesure (2) sont situés dans un boîtier hermétique (12) rempli d'un agent inerte, l'une des parois du boîtier étant formée par la membrane.

5. Procédé de conversion de micromouvement d'un signal électrique au moyen d'une quantification naturelle, comprenant les étapes suivantes :

> i. entraîner un électroaimant de fixation (4) à fixer un élément de mesure (2) lorsqu'un courant d'émission de champ électronique se produit; et
> ii. lorsque le courant d'émission de champ électronique est interrompu, entraîner l'électroaimant de fixation à relâcher l'élément de mesure et à entraîner un électroaimant de traction (5) à attirer l'élément de mesure dans une direction vers un élément sensible (1).